# EUROPEAN PATENT APPLICATION

(11) **EP 0 929 202 A1**
(43) Date of publication of application: **14.07.1999**
(21) Application number: 98309983.9
(22) Date of filing: 04.12.1998
(51) Int. Cl.: H04Q 7/36

(54) **Uplink channel allocation for a mobile cellular network**

(30) Priority: 06.01.1998 EP 98300051
(71) Applicant: LUCENT TECHNOLOGIES INC., Murray Hill, New Jersey 07974-0636 (US)
(72) Inventor: Ten Brink, Stephen, 71573 Allmersback (DE)
(74) Representative: Williams, David John

(57) **Abstract**

A mobile cellular telecommunication network is disclosed having a plurality of cells between which are defined reuse regions each served by a plurality of directional antennas each at respective base stations located around the reuse region boundary. Means are provided for allocating all uplink channels at all antennas in all reuse regions. Further means are provided for determining boundaries of microcells within the reuse regions, a plurality, equal to or greater than the plurality of antennas, of microcells being served by each antenna in the reuse region. Further means is provided for allocating to each microcell a group of uplink channels in an orthogonal reuse pattern within the reuse region. Means for ascribing a position to mobile terminals within each reuse region is provided. Yet further means is provided for allocating uplink channels for use by a mobile terminal from the group allocated to the microcell which contains its ascribed position.

Since all channels are reused at all antennas, all channels are reusable several times in all cells, greatly increasing the number of mobile terminals which may operate without reducing cell size or requiring additional base stations.

## Description

This invention relates to mobile cellular telecommunication networks.

There are different systems for allocating channels for uplink communications. All strive to maintain orthogonality between mobile terminals in the same cell. Conventionally, the channels allocated to one cell are not reused in adjacent cells so as to reduce interference.

Against this background there is provided a mobile cellular telecommunication network, comprising a plurality of cells between which are defined reuse regions each served by a plurality of directional antennas each at respective base stations located around the reuse region boundary; means for allocating all uplink channels at all antennas in all reuse regions; means for determining boundaries of microcells within the reuse regions, a plurality, equal to or greater than the plurality of antennas, of microcells being served by each antenna in the reuse region; means for allocating to each microcell a group of uplink channels in an orthogonal reuse pattern within the reuse region; means for ascribing a position to mobile terminals within each reuse region by comparing power levels of signals received from different base stations at the mobile terminal or by comparing power levels of signals received at different base stations from the mobile terminal; and means for allocating uplink channels for use by a mobile terminal from the group allocated to the microcell which contains its ascribed position.

Since all channels are reused at all antennas, all channels are reusable several times in all cells, greatly increasing the number of mobile terminals which may operate without reducing cell size or requiring additional base stations.

Preferably, an equal number of channels is allocated to each microcell.

In order to ascribe positions to the mobile terminals, each mobile terminal is preferably adapted to determine power levels of at least the three strongest downlink signals from respective base station antennas and to communicate the power levels and antenna identities to the base station having the strongest downlink signal; the base station including means for computing a virtual position of the mobile terminal apparent from the power levels. The virtual position may not correspond with the geographic position of the mobile terminal. Indeed, it will only do so when there is no shadow fading.

The mobile terminal is preferably adapted to determine the power levels of pilot signals on the down link.

The boundaries of the microcells are preferably determined dynamically such that each microcell within a reuse region carries approximately the same amount of traffic. To that end, for each antenna a database is preferably maintained with the ascribed position of all mobile terminals in the reuse region.

One embodiment of the invention will now be described, by way of example, with reference to the accompanying drawings, in which:
Figure 1 is a schematic plan of part of a cellular mobile communications network embodying the invention and showing hexagonal base station cells and reuse regions;
Figure 2 is a schematic plan of one of the cells of Figure 1 showing micro cells therein;
Figure 3 is a schematic plan similar to that of Figure 2, showing a different arrangement of microcells;
Figure 4 is a plan similar to that of Figure 3 but showing how the microcells can be arranged to obtain equal usage in each;
Figure 5 is a schematic plan of a square cell showing microcells therein.
Figure 6 is a chart showing a channel allocation pattern which may be used in the network of Figure 1 or 5;
Figures 7a is a chart showing a channel allocation pattern alternative to that of Figure 6;
Figure 7b is a chart showing another alternative channel allocation pattern;
Figure 8 is a chart showing another alternative channel allocation pattern; and
Figure 9 is a flow chart showing how channels are allocated in the network of Figure 1 or Figure 4.

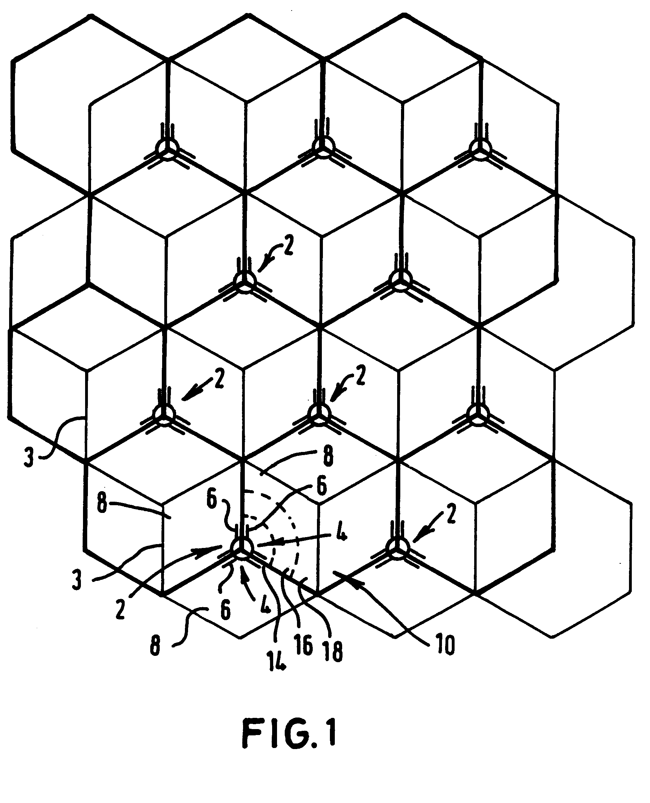

Referring to the drawings, base stations 2 each serve a respective hexagonal base station cell 3 bounded by thin lines in Figure 1. Each base station comprises three receive stations 4. Each receive station has a 120° directional antenna 6. The three antennas 6 are directed at respective receive cells 8 each in an individual 120° sector within the base station cell 3.

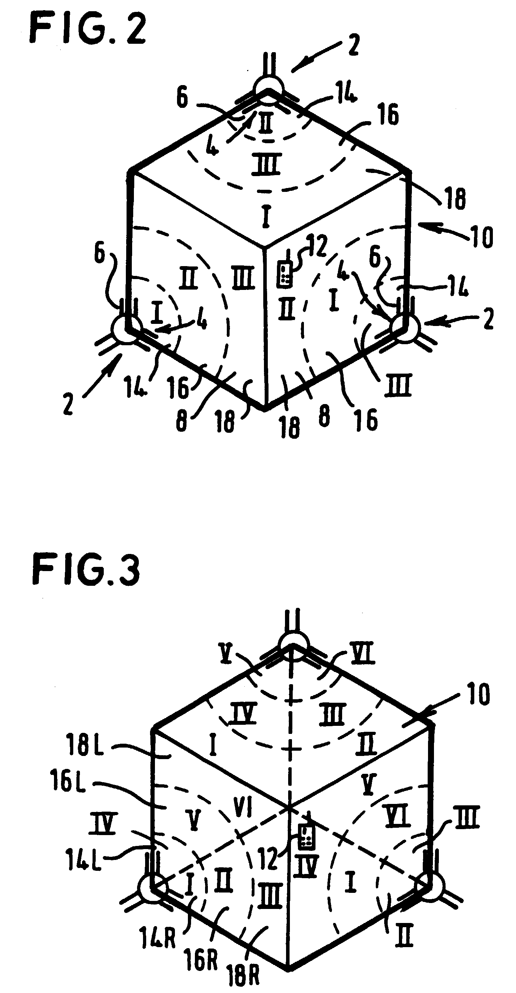

An area 10 served by three receive stations 4, thus containing three receive cells 8, constitutes a hexagonal reuse region and is bounded by thick lines in Figure 1. A reuse region 10 is illustrated, to a larger scale in Figure 2. A reuse region is defined by the fixed directional antenna pattern of the receive station.

All uplink channels used by the network are available for allocation at all receive stations 4 for their respective receive cells 8. Inside each receive cell, uplink channels are allocated according to the position of the mobile terminals one of which is illustrated at 12. In the example illustrated in Figure 2 each receive cell is divided into three microcells 14, 16 and 18 each progressively further from the respective base station. The total set of uplink channels is divided into three blocks indicated by numerals I, II and III in Figure 2. As will be seen, all three blocks are allocated at each receive station 4 and are allocated to the respective microcells 14, 16 and 18 in an orthogonal reuse pattern which, if used in all reuse regions, ensures that adjacent microcells do not share the same blocks of channels either within a reuse region 10 or between adjacent reuse regions.

Another reuse pattern is illustrated in Figure 3. Here the total set of channels is divided into channel blocks I to VI. The receive cells are divided into microcells according to distance from the receive station and laterally into left and right sectors thus defining microcells 14L, 16L, 18L, 14R, 16R and 18R. Again the reuse pattern illustrated ensures orthogonality between adjacent microcells whether within one reuse region 10 or between adjacent reuse regions. The antennas 6 cover an entire receive cell. They do not provide directional reception divided into left and right sectors.

The position of a mobile terminal 12 is assessed from the power of pilot signals transmitted by all base stations on the downlink. The mobile terminal 12 identifies at least the three pilot signals received with the most power and the base station from which they each is transmitted. Among these the mobile terminal identifies the most powerful pilot signal and its base station. The mobile terminal 12 transmits the power levels and station identities to the base station from which the most powerful pilot signal was received on a call setup channel. The base station then calculates the virtual or apparent position of the mobile station by power triangulation in which it determines the virtual or apparent distance from each by comparing the power levels of the received pilot signal. The virtual or apparent position may correspond to the geographic position, but only in the case where there is no shadow fading.

In an alternative arrangement, the power level of signals received from the base station is measured at each base station in range. The powers levels are then transmitted to a master base station which compares the power levels to ascribe a virtual position to the mobile terminal.

The base station then determines in which microcell the virtual position of the mobile terminal is and allocates a channel from those available in that microcell.

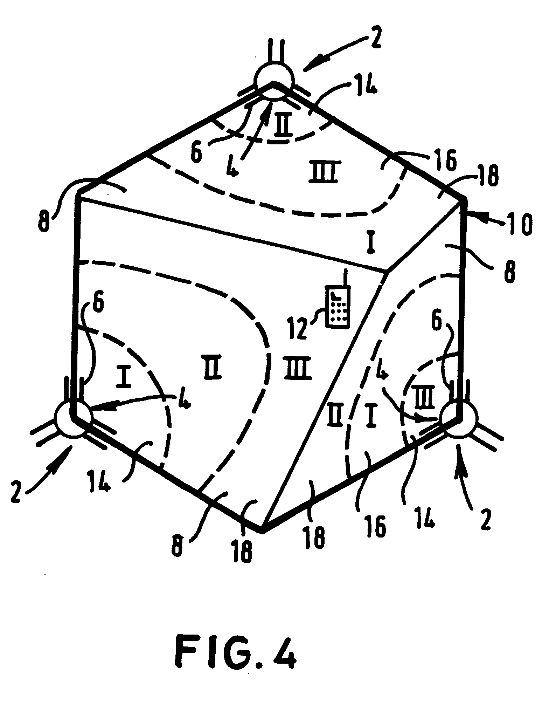

As shown in Figure 4, the receive cells and the microcells do not have to be regular or equal. Indeed, it is preferable that the microcells are dynamically defined expanding and contracting so that within one reuse region, each microcell carries the same amount of traffic. To that end a database of the virtual positions of mobile terminals is maintained for each reuse region.

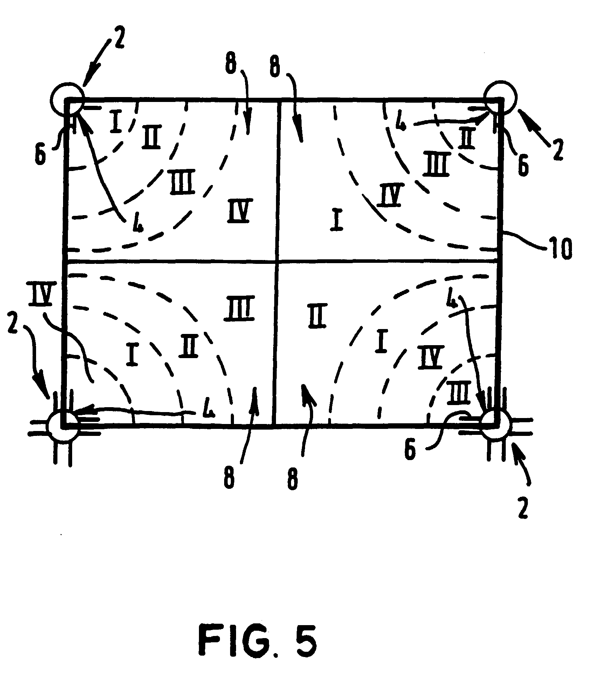

The invention is applicable to cells of any possible shape. An arrangement of microcells in a rectangular cell is shown in Figure 5.

The invention is generally applicable to different types of cellular mobile telecommunications systems in particular those maintaining an orthogonal multiple user uplink communication and interferer diversity.

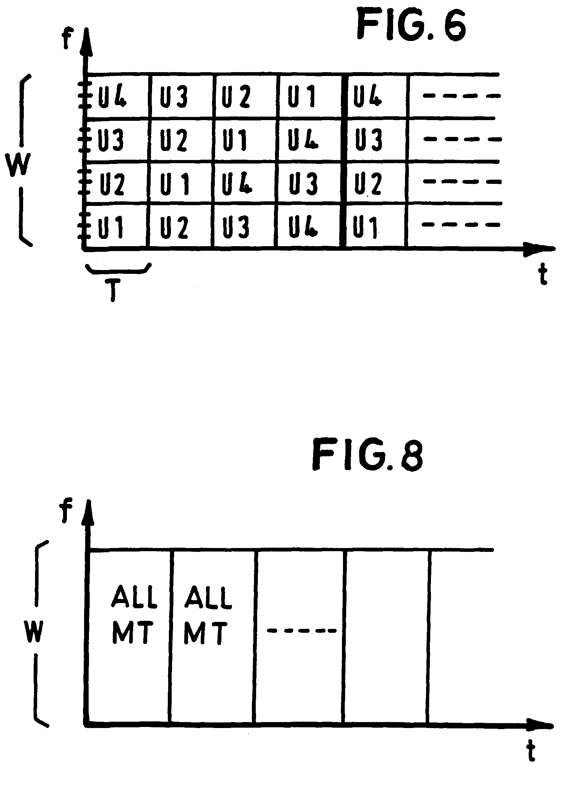

One example is a multicarrier system using a contiguous set of sub-carriers per user. As shown in Figure 6, sets of subcarriers are hopped slowly in successive time periods T with orthogonal frequency hopping patterns between users (U1 to U4) in the same receive cell 8. The multicarrier system could apply OFDM modulation (Orthogonal Frequency Division Multiplex). The mobile terminals are synchronized such that their delay difference at the base station is within the guard time of the OFDM symbol.

A narrow band TDMA alternative (like GSM) is possible in which only one sub-carrier is allocated per user. The sub-carriers are frequency hopped, the hopping patterns being orthogonal among the users in the same receive cell. OFDM modulation is not applied. The mobile terminals are synchronised so that their delay difference at the base station is within the guard time of the TDMA burst.

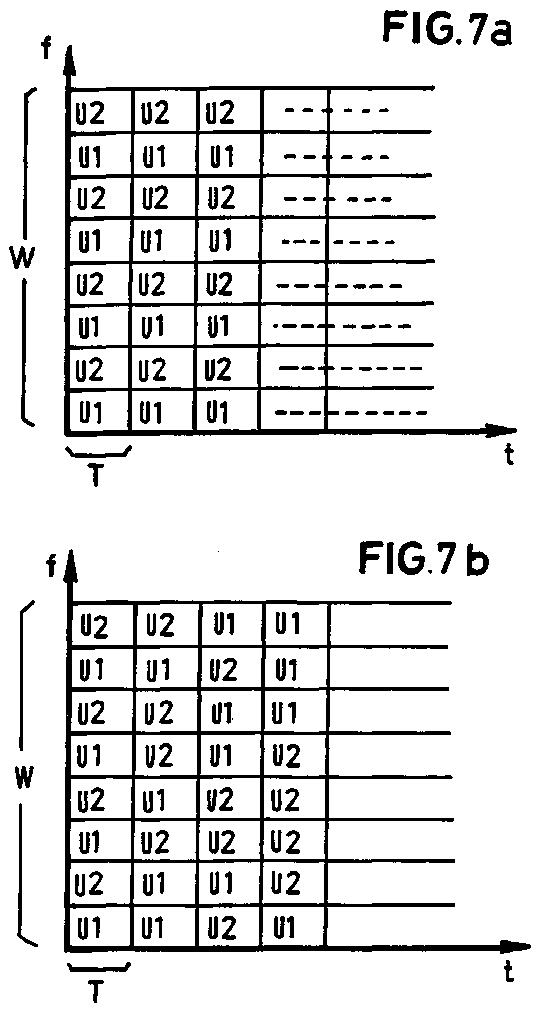

In another example, a non-contiguous set of sub-carriers, illustrated in Figure 7a, is allocated per user (U1 and U2 are shown) so that the set of sub-carriers of users within the same receive cell are disjoint. The set of sub-carriers is referred to as a sub-carrier code.

The sub-carriers could be slowly frequency hopped as illustrated in Figure 7b.

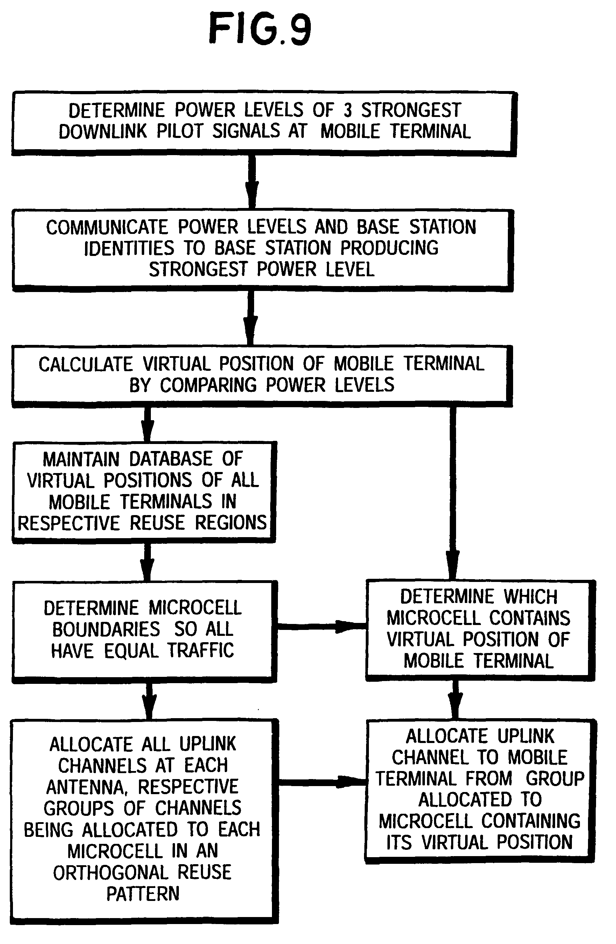

In the arrangement for a code divisional multiple access spread spectrum system illustrated in Figure 8, all mobile terminals use the same frequency band all the time if active. Within a receive cell orthgonality is provided by orthogonal spreading codes and tight synchronisation of the mobile terminals, or by multi-user detection without either synchronisation or orthogonal spreading codes.

## Claims

1. A mobile cellular telecommunication network, comprising a plurality of cells between which are defined reuse regions each served by a plurality of directional antennas each at respective base stations located around the reuse region boundary; means for allocating all uplink channels at all antennas in all reuse regions; means for determining boundaries of microcells within the reuse regions, a plurality, equal to or greater than the plurality of antennas, of microcells being served by each antenna in the reuse region; means for allocating to each microcell a group of uplink channels in an orthogonal reuse pattern within the reuse region; means for ascribing a position to mobile terminals within each reuse region by comparing power levels of signals received from different base stations at the mobile terminal or by comparing power levels of signals received at different base stations from the mobile terminal; and means for allocating uplink channels for use by a mobile terminal from the group allocated to the microcell which contains its ascribed position.

2. A network as claimed in claim 1, wherein an equal number of channels is allocated to each microcell.

3. A network as claimed in claim 1 or 2, wherein each mobile terminal is adapted to determine power levels of at least the three strongest downlink signals from respective base station antennas and to communicate the power levels and antenna identities to the base station having the strongest downlink signal; said base station including means for computing a virtual position of the mobile terminal apparent from the power levels.

4. A network as claimed in claim 3, wherein the mobile terminal is adapted to determine the power levels of pilot signals on the down link.

5. A network as claimed in any preceding claim, wherein the boundaries of the microcells are determined such that each microcell within a reuse region carries approximately the same amount of traffic.

6. A network as claimed in claim 5, wherein for each antenna a database is maintained with the ascribed position of all mobile terminals in the reuse region.
